# EUROPÄISCHE PATENTANMELDUNG

(11) **EP 0 633 441 A1**
(43) Veröffentlichungstag der Anmeldung: **11.01.1995**
(21) Anmeldenummer: 94108587.0
(22) Anmeldetag: 04.06.1994
(51) Int. Cl.: F27D 11/04

(54) **Schmelzofen zur thermischen Behandlung von schwermetallhaltigen und/oder dioxinhaltigen Sonderabfällen**

(30) Priorität: 06.07.1993 DE 4322448
(71) Anmelder: ABB K.K., Tokyo 107 (JP)
(72) Erfinder: Ammon, Hans, CH-5430 Wettingen (CH); Pfister, Markus, CH-5442 Fislisbach (CH); Wieckert, Christian, Dr., D-5703 Seon (CH)
(74) Vertreter: Hetzer, Hans Jürgen

(57) **Zusammenfassung**

Bei einem Schmelzofen zur thermischen Behandlung von schwermetallhaltigen und/oder dioxinhaltigen Sonderabfällen mit einem Hauptofengefäss, das eine Schmelzwanne zur Aufnahme einer Schmelze (8), mindestens eine Beschickungsvorrichtung (7) für die Zufuhr des zu behandelnden Gutes, eine von der Beschickungsvorrichtung räumlich distanzierte Austragkammer (15) aufweist, ist diese mit der Schmelzwanne über einen Siphon (9) gasdicht verbunden. Im Hauptofengefäss (1) und in der Austragkammer (15) sind dritte Heizelemente in Form von Badelektroden (19,20) vorgesehen, mittles derer ein elektrischer Strom durch die Schmelze (8) und den Siphon (9) zur zusätzlichen Aufheizung der Schmelze geleitet werden kann.

Auf diese Weise können Verstopfungen des Siphons zuverlässig vermieden werden.

## Beschreibung

### TECHNISCHES GEBIET

Bei der Erfindung wird ausgegangen von einem Schmelzofen zur thermischen Behandlung von schwermetallhaltigen und/oder dioxinhaltigen Sonderabfällen, umfassend ein Ofengefäss, das eine Schmelzwanne zur Aufnahme einer Schmelze aufweist, mindestens eine Beschickungsvorrichtung für die Zufuhr des zu behandelnden Gutes, mindestens eine von der Beschickungsvorrichtung räumlich distanzierte Austragkammer, die mit der Schmelzwanne gasdicht über einen Siphon verbunden ist, mindestens eine in das Ofengefässinnere hineinragenden ersten Heizvorrichtung mit mindestens einer in die Austragkammer hineinragenden zweiten Heizvorrichtung.

Ein Schmelzofen dieser Bauart ist beispielsweise aus der Europäischen Patentanmeldung mit der Veröffentlichungsnummer 0 487 770 bekannt.

### STAND DER TECHNIK

Bei der Abtrennung von giftigen, flüchtigen chemischen Verbindungen aus einem Gemenge von festen Partikeln wird Elektrofilterstaub von industriellen Verbrennungsanlagen mit umweltfeindlichen Schadstoffen, wie z. B. Schwermetallen und deren Verbindungen, in einem Schmelzofen bis auf über 1400 °C erhitzt. Die dabei verdampfenden giftigen chemischen Verbindungen und Elemente werden über einen Abzug aus dem Schmelzofen entfernt, kondensiert und ausgetragen. Der nicht verdampfte Rückstand wird sukzessive eingeschmolzen und die Schmelze kontinuierlich oder intermittierend aus dem Reaktionsraum ausgetragen und zur Erstarrung gebracht. Zum Erhitzen sind im Gasraum des Schmelzofens elektrische Heizvorrichtungen vorgesehen. Diese sind von der Ofenatmosphäre durch keramische Schutzrohre getrennt.

Der Austrag erfolgt dabei häufig aus einer separaten Austragkammer, die gasdicht über ein Syphon mit dem eigentlichen Schmelzofen verbunden ist. Dadurch wird verhindert, dass giftige Gase in die Austragkammer und damit in die Umgebung gelangen. Im Normalbetrieb sind die Schmelzeniveaus im Schmelzofen und in der Austragkammer gleich.

Die Verbindung der beiden üblicherweise separat beheizten Oefen (Hauptofen 1 und Austragkammer 15) ist insbesondere in Phasen mit geringem Durchsatz von zu verglasendem Material oder während der Anfahrphase ein kritischer Bereich. Es kann nämlich vorkommen, dass dort die Schmelze zu kalt wird und damit nicht mehr gut hindurchfliesst. Dies führt zu unerwünschten Niveauunterschieden in den beiden Oefen

### DARSTELLUNG DER ERFINDUNG

Ausgehend vom Bekannten liegt der Erfindung die Aufgabe zugrunde, einen Schmelzofen zur thermischen Behandlung von schwermetallhaltigen und/oder dioxinhaltigen Sonderabfällen anzugeben, bei dem sichergestellt ist, dass die freie Verbindung zwischen dem Hauptschmelzofen und der Austragkammer zuverlässig gewährleistet.

Diese Aufgabe wird erfindungsgemäss dadurch gelöst, dass im Hauptofengefäss und in der Austragkammer dritte Heizelemente in Form von Badelektroden vorgesehen sind, mittles derer ein elektrischer Strom durch die Schmelze und den Siphon zur zusätzlichen Aufheizung der Schmelze leitbar ist.

Durch den Einsatz dieser Badelektroden gelingt es, die Schmelze im Bereich vor, im und hinter dem Siphon auf einer genügend hohen Temepratur zu halten, dass in allen Betriebsphasen Verstopfungen des Siphon zuverlässig vermieden werden und somit auch keine unerwünschten Niveauunterschiede in beiden Ofenbereichen mehr auftreten. Die Badelektroden können entweder seitlich und/oder auch von unten her in die Schmelze ragen. Seitlich angeordnete Badelektroden sind in der Regel leichter nachzustossen, während vom Boden her hineinragende Badelektroden - eine genügende Höhe des Ofenbodens über dem Gebäudeboden vorausgesetzt - weniger Platz benötigen.

### KURZE BESCHREIBUNG DER ZEICHNUNGEN

Die Erfindung wird nachstehend anhand eines Ausführungsbeispiels eines Schmelzofens zur thermischen Behandlung von schwermetallhaltigen und/oder dioxinhaltigen Sonderabfällen erläutert. Es zeigen:
- Fig.1: einen Längsschnitt Schnitt durch einen Schmelzofen, bestehend aus einem Hauptofen und einer Austragkammer;
- Fig.2: einen Querschnitt durch den Schmelzofen gemäss Fig.1 längs deren Linie AA;
- Fig.3: ein vereinfachtes Schemabild, das die Verteilung paarweise angeordneter Badelektroden und deren elektrische Anspeisung zeigt, wobei je zwei diametral gegenüberliegende Badelektroden am selben Pol der Stromversorgung liegen;
- Fig.4: ein vereinfachtes Schemabild mit nur einem Badelektrodenpaar auf einer Ofenseite;
- Fig.5: ein vereinfachtes Schemabild mit einer alternativen Anordnung von zwei diametral gegenüberliegenden Badelektroden;
- Fig.6: eine andere alternative Ausführungsform mit Badelektroden im Boden des Schmelzofens;
- Fig.7: einen vergrösserten Querschnitt durch die Einrichtung zur Ueberwachung der Höhe des Badspiegels der Schmelze.

### WEGE ZUR AUSFÜHRUNG DER ERFINDUNG

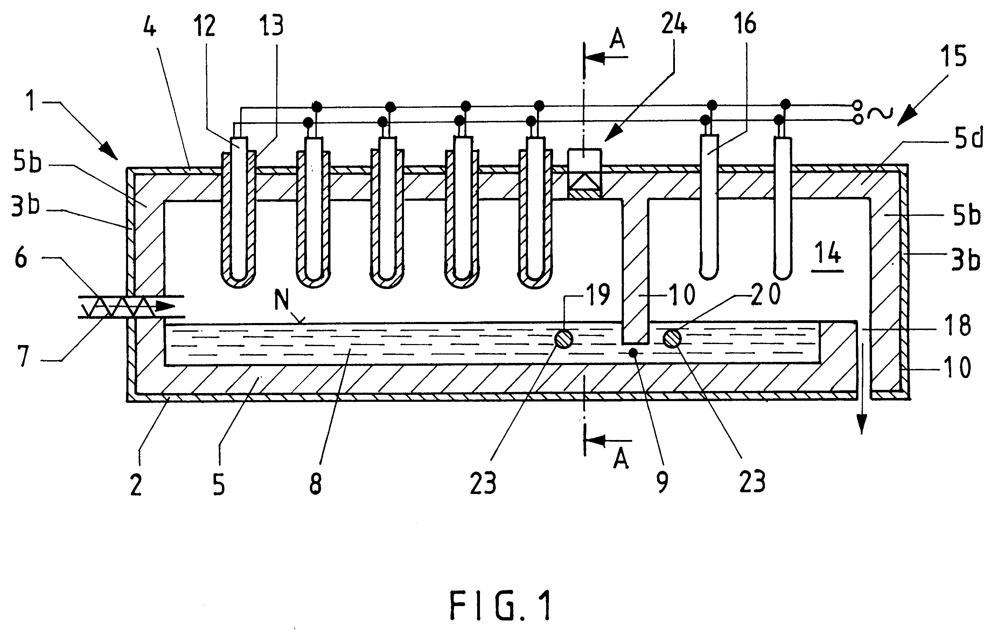

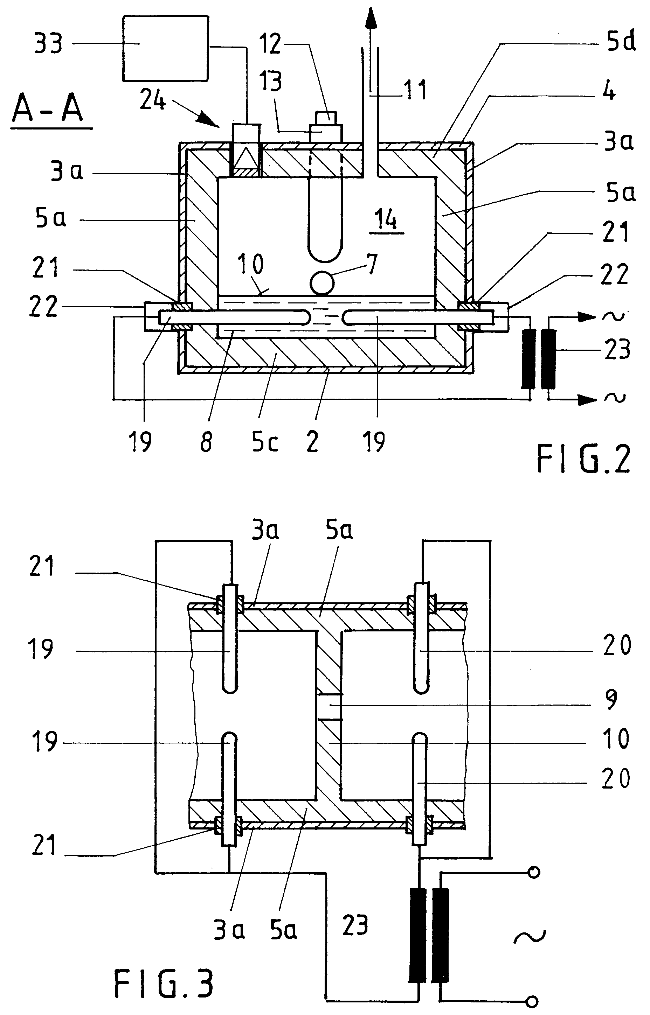

In Fig. 1 und 2 ist mit 1 ein Schmelzofen bezeichnet. In einem metallischen Gehäuse sind Bodenwand 2, Seitenwänden 3a, 3b und Decke 4 mit einer Ausmauerung 5 mit Seitenwänden 5a, 5b und Boden 5c und Decke 5d aus Feuerfestmaterial, wie es beispielsweise im Glasschmelzofenbau verwendet wird. Der untere Teil des Gefässinneren bildet die Schmelzwanne. Der zu behandelnde Filterstaub wird der Wanne über einen Einlass 6 mittels einer Eintragvorrichtung, z.B. eine Förderschnecke 7, an einer Stirnwand des Ofens zugeführt. Die Schmelze 8 verlässt den eigentlichen Ofen durch einen Syphon an der gegenüberliegenden Stirnwand 10, welche zu diesem Zweck bis auf einen Durchlass 9 an den Boden 5c heranreicht. Das Niveau N der Schmelze liegt dabei unterhalb der Förderschnecke 7 und oberhalb des Durchlasses 9. Die durch die thermische Behandlung freigesetzten bzw. umgesetzten flüchtigen Stoffe verlassen den Ofen über einen Gasauslass 11 (Fig.2), welcher im oberen Bereich der dem Einlass 6 gegenüberliegenden Bereich der Decke 4 angeordnet ist.

Eine erste Heizvorrichtung in Form elektrischer Heizelemente 12, welche von Schutzrohren 13 auf Keramik-Basis ummantelt sind, ragt von oben her in den Gasraum 14 des Ofens hinein, ohne in die Schmelze 8 einzutauchen.

Ein Schmelzofen, wie er im vorstehenden beschrieben wurde, das Verfahren zu seinem Betrieb, die sich im Ofen abspielenden Prozesse, sowie die Weiterbehandlung des den Ofen über den Gasauslass 11 verlassenden flüchtigen Substanzen ist Gegenstand der EP-A-0 313 902 oder EP-A-0 359 931, auf welche hiermit zwecks Vermeidung von Wiederholungen ausdrücklich Bezug genommen wird. Anlässlich des Seminars "Müllverbrennung" der Technischen Akademie Esslingen in Sarnen (Schweiz) vom 2. und 3.Mai 1991, wurde ferner ein Bericht der Herren J.Jochum, H.Jodeit und E.Schmidl mit dem Titel "Die thermische Reststoffbehandlung nach dem DEGLOR-Verfahren" verteilt, in welchem über eine Piltotanlage in Hinwil (Schweiz) berichtet wird, die nach dem eingangs genannten Verfahren arbeitet.

An den eigentlichen Schmelzofen 1 schliesst sich eine Austragkammer 15 an, die mit dem Hauptofen 1 über den besagten Syphon 9 in Verbindung steht. Diese Austragkammer 15 weist in etwa den selben Aufbau auf wie der Hauptofen 1 und wird durch zweite Heizelemente 16 geheizt. Die Schmelze 8 verlässt die Austragkammer über einen Ueberlauf 18 an der dem Syphon 9 gegenüberliegenden Kammerwand 5b.

Die Verbindung der beiden üblicherweise separat beheizten Oefen (Hauptofen 1 und Austragkammer 15) ist insbesondere in Phasen mit geringem Durchsatz von zu verglasendem Material oder während der Anfahrphase ein kritischer Bereich. Es kann nämlich vorkommen, dass dort die Schmelze zu kalt wird und damit nicht mehr gut hindurchfliesst. Dies führt zu unerwünschten Niveauunterschieden in den beiden Oefen.

Der Bereich vor, im und nach dem Syphon wird nun erfindungsgemäss durch zusätzliche Heizelemente 19, 20 aufgeheizt um sicherzustellen, dass der Durchlass 9 des Syphons sich nicht zusetzt. Für diese zusätzlichen Aufheizung sind nun in der Seitenwand 5a sowohl des Hauptofens 1 als auch der Austragkammer 15 Badelektroden 19 bzw. 20 vorgesehen, welche vergleichsweise dicht über dem Ofenboden 5c angeordnet sind, damit sie stets von der Schmelze bedeckt sind. Die Badelektroden - sie bestehen vorzugsweise aus Molybdän - sind nachstossbar in Durchführungen 21 gehaltert, auswechselbar und aussen durch Kappen 22 abgedeckt. Um die Oxidation des heissen Molybdäns zu verhindern, sind die Durchführungen 21 entweder flüssigkeitsgekühlt, oder sie werden mit einem Inertgas gespült. Die Stromversorgung dieser "Siphonheizung" erfolgt über einen Transformator 23, der primärseitig an das normale Wechselspannungsnetz angeschlossen ist.

Wie aus Fig.2 und dem Schemabild gemäss Fig.3 hervorgeht, sind die Badelektroden 19 und 20 auf jeder Ofenseite paarweise angordnet. Die Beschaltung erfolgt dabei so, dass diametral gegenüberliegende Badelektroden am selben Pol der Stromversorgung liegen.

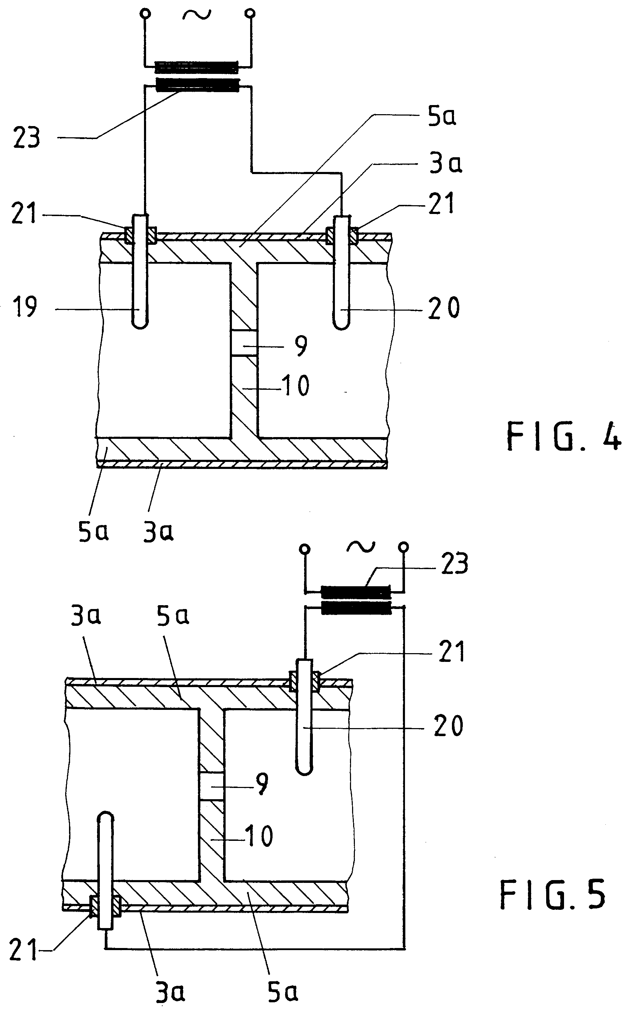

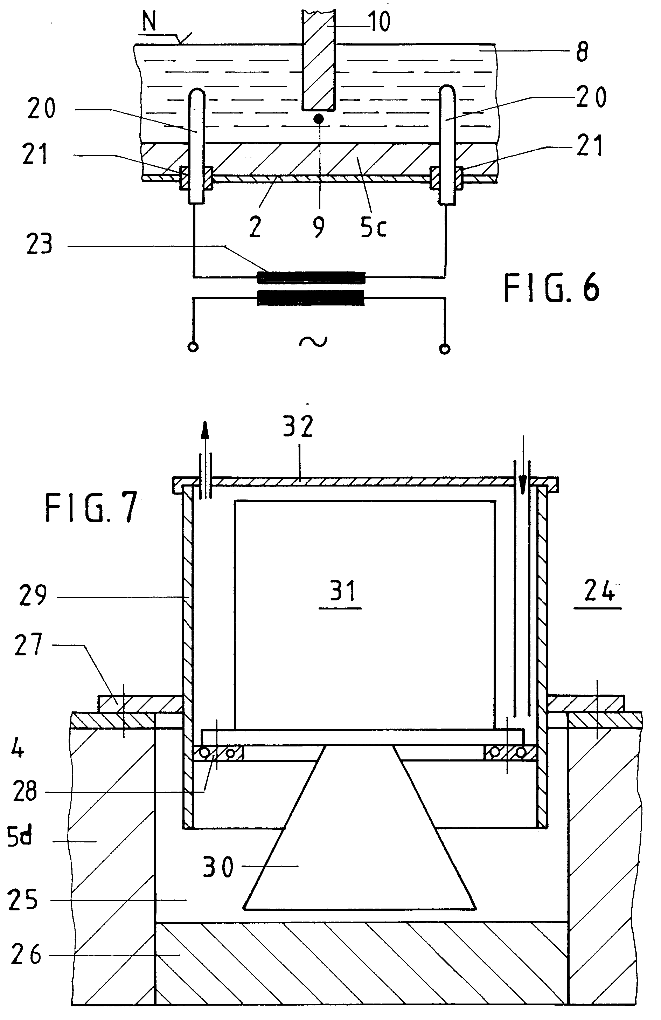

Eine andere Möglichkeit - sie ist in Fig.4 und 5 dargestellt - sieht vor, jeweils nur eine Badeletrode 19 bzw. 20 im Hauptofen 1 und in der Austragkammer 15 anzuordnen, wobei das Badelektrodenpaar entweder auf der selben Ofenseite (Fig.4) oder auf gegenüberliegenden Ofenseiten (Fig.5) oder auch im Boden des Hauptofen 1 und der Austragkammer 15 (Fig.6) angeordnet sein kann.

Bei nur einer Badelektrode im Hauptofen 1 und Austragkammer 15 (Fig.4,5 und 6) sind die Badelektroden 19 und 20 an die beiden Sekundärwicklungsanschlüsse des Transformators 23 angeschlossen. Bei der Variante gemäss Fig.3 sind die Bodenelektroden 19 im Hauptofen 1 und die Badelektroden 20 in der Austragkammer 15 jeweils an die beiden Klemmen des Transformators 23 geführt.

Bei Anschalten an das Netz fliesst ein Strom von der bzw. den Badelektroden 19 durch die Schmelze 8, Syphon 9 und die Badelektrode(n) 20, welche eine Aufheizung der Schmelze zumindest im Bereich des Stromflusses, also im Siphonbereich, bewirkt.

Zur berührungslosen Messung des Niveaus N des Schmelze 8 im Hauptofen 1 ist in dessen Decke ein Radar-Entfernungsmesser 24 zur Erfassung der Höhe des Badspiegels der Schmelze vorgesehen. Er ist in Fig.7 schematisch und gegenüber Fig.1 in vergrössertem Massstab dargestellt. Die Decke des Hauptofens 1 ist mit einem etwa kreisrunden Durchbruch 25 versehen, der gegenüber dem Ofeninneren mit einem Abschirmzylinder 26 aus hoch temperaturbeständigem Material, z.B. Keramik verschlossen ist. Dieses Material muss für Mikrowellen transparent sein. In den Durchbruch ist ein mit einem Aussenflansch 27 und einem Innenflansch 28 versehenes Rohrstück 29 eingesetzt und mit der Decke 4 verschraubt. Auf dem Innenflansch 28 ruht der eigentliche Radar-Entfernungsmesser, von dem lediglich seine Kegelantenne 30 mit einem Oeffnungsdurchmesser von 150 mm und seine von einem Gehäuse 31 umgebenen elektrischen und elektronischen Komponenten dargestellt sind. Ein Deckel 32 schützt das Gerät gegenüber Umgebenseinflüssen. Das Ausgangssignal des Radar-Entfernungsmessers 24 wird einer Anzeige- und Auswerteeinrichtung 33 zugeführt, das in die Anlagensteuerung integriert ist.

Radar-Entfernungsmesser dieser Art sind an sich bekannt und können ohne tiefgreifende Modifikationen für den hier im Vordergrund stehenden Zweck eingesetzt werden. Es ist nur für eine ausreichende Kühlung der mechanischen und elektrischen/elektronischen Komponenten zu sorgen, z.B. durch Luftkühlung der elektrischen und elektronischen Komponenten, ergänzt durch durch Flüssigkeitskühlung des Innenflansches 28 - angedeutet durch Kühlbohrungen 28a im Flansch 28 - und/oder des Rohrstücks 29. Ferner ist darauf zu achten, dass die Materialeigenschaften und auch die Höhe des Abschirmzylinders 26 auf die Wellenlänge des Radars abgestimmt sind, um Reflexionen zu vermeiden.

Bei einer Testmessung an einer Anlage zum Einschmelzen von Rückständen aus der Müllverbrennung konnte mit einem Radar-Entfernungsmesser mit der Frequenz von 5,8 GHz und einer Kegelantenne mit einem Oeffungsdurchmesser von 150 mm die Höhe des Schmelzbades auf 2 bis 3 cm genau bestimmt werden.

Es versteht sich von selbst, dass auch die Austragkammer 15 mit einem derartigen Radar-Entfernungsmesser 24 versehen werden kann.

### BEZEICHNUNGSLISTE

- 1: Hauptschmelzofen
- 2: Bodenwand von 1
- 3: Seitenwände von 1
- 4: Decke von 1
- 5: Ausmauerung
- 6: Einlass
- 7: Förderschnecke
- 8: Schmelze
- 9: Syphon
- 10: Trennwand zwischen Hauptofen und Austragkammer 15
- 11: Gasauslass
- 12,16: elektrische Heizelemente
- 13: Schutzrohre
- 14: Gasraum
- 15: Austragkammer
- 18: Ueberlauf
- 19,20: Badelektroden
- 21: keramische Durchführungen
- 22: Kauben von 19,20
- 23: Transformator
- 24: Radar-Entfernungsmesser
- 25: Durchbruch in der Ofendecke
- 26: Abschirmzylinder
- 27: Aussenflansch von 29
- 28: Innenflansch von 29
- 28a: Kühlbohrungen in 28
- 29: Rohrstück
- 30: Antenne
- 31: Gehäuse
- 32: Deckel von 29
- 33: Anzeige- und Auswerteeinrichtung
- N: Niveau der Schmelze

## Patentansprüche

1. Schmelzofen zur thermischen Behandlung von schwermetallhaltigen und/oder dioxinhaltigen Sonderabfällen, umfassend ein Hauptofengefäss, das eine Schmelzwanne zur Aufnahme einer Schmelze (8)aufweist, mindestens eine Beschickungsvorrichtung (7) für die Zufuhr des zu behandelnden Gutes, mindestens eine von der Beschickungsvorrichtung räumlich distanzierte Austragkammer (15), die mit der Schmelzwanne über einen Siphon (9) verbunden ist, mindestens eine in das Ofengefässinnere hineinragende erste Heizvorrichtung (12), und mindestens eine in die Austragkammer hineinragende zweite Heizvorrichtung (16), dadurch gekennzeichnet, dass im Hauptofengefäss (1) und in der Austragkammer (15) dritte Heizelemente in Form von Badelektroden (19,20) vorgesehen sind, mittles derer ein elektrischer Strom durch die Schmelze (8) und den Siphon (9) zur zusätzlichen Aufheizung der Schmelze leitbar ist.

2. Schmelzofen nach Anspruch 1, dadurch gekennzeichnet, dass die Badelektroden (19,20) seitlich und/oder von unten her in die Schmelze (8) hineinragen.

3. Schmelzofen nach Anspruch 1 oder 2, dadurch gekennzeichnet, dass in der Decke zumindest des Hauptofengefässes (1) eine auf dem Prinzip der Radar-Entfernungsmessung bsierende Einrichtung (24) zur berührungslosen Erfassung der Höhe (n) des Badspiegels der Schmelze (8) vorgesehen ist.

4. Schmelzofen nach Anspruch 4, dadurch gekennzeichnet, dass in der Decke des Ofengefässes (1) und /oder der Austragkammer (15) ein gegen das Ofeninnere verschlossener Durchbruch (25) vorgesehen ist, in welche die besagte Entfernungsmesseinrichtung (24) eingesetzt ist.
